# EUROPEAN PATENT APPLICATION

(11) **EP 4 718 734 A1**
(43) Date of publication of application: **01.04.2026**
(21) Application number: 24838305.1
(22) Date of filing: 29.02.2024
(51) Int. Cl.: H04B 1/401

(54) **RADIO FREQUENCY CIRCUIT AND ELECTRONIC DEVICE**

(30) Priority: 10.07.2023 CN 202310845979
(71) Applicant: Honor Device Co., Ltd., Shenzhen, Guangdong 518040 (CN)
(72) Inventor: HUO, Qiang, Shenzhen, Guangdong 518040 (CN); SUN, Tao, Shenzhen, Guangdong 518040 (CN); ZHAO, Haiguang, Shenzhen, Guangdong 518040 (CN)
(74) Representative: Isarpatent
(86) International application number: PCT/CN2024/079435
(87) International publication number: WO 2025/011044

(57) **Abstract**

This application discloses a radio frequency circuit and an electronic device, and relates to the field of wireless communication. The radio frequency circuit can adapt to a single antenna when a radio frequency integrated component having dual antenna ports is used in the electronic device, and ensure communication performance of the electronic device to the maximum extent. The radio frequency circuit includes a radio frequency integrated component and a controller. The radio frequency integrated component includes a first radio frequency port, a second radio frequency port, a third radio frequency port, a first antenna port, a second antenna port, a first single-pole multi-throw switch, a second single-pole multi-throw switch, and two filtering components. The controller is configured to control the first single-pole multi-throw switch to select a transmission link in which the first radio frequency port, the first filtering component, and the first antenna port are located; or control the first single-pole multi-throw switch to select a transmission link in which the second radio frequency port and the first antenna port are located, and control the second single-pole multi-throw switch to select a transmission link in which the third radio frequency port, the second filtering component, and the second antenna port are located.

## Description

This application claims priority to Chinese Patent Application No. 202310845979.1, filed with the China National Intellectual Property Administration on July 10, 2023 and entitled "RADIO FREQUENCY CIRCUIT AND ELECTRONIC DEVICE", which is incorporated herein by reference in its entirety.

### TECHNICAL FIELD

Embodiments of this application relate to the field of wireless communication, and in particular, to a radio frequency circuit and an electronic device.

### BACKGROUND

An antenna is installed in an electronic device having a cellular mobile communication function. Specifically, the antenna may be connected to a post-stage circuit by using a radio frequency integrated component. Generally, the radio frequency integrated component includes two antenna ports, and each of the two antenna ports is connected to one antenna. That is, when the radio frequency integrated component is used, two antennas need to be installed in the electronic device. In some electronic devices (for example, a smartwatch) with limited internal space, where two antennas cannot be installed, a path selector (for example, a single-pole double-throw switch) may be added between the radio frequency integrated component and the antenna. A common terminal of the path selector is connected to the antenna, and two active terminals of the path selector are respectively connected to the two antenna ports of the radio frequency integrated component. However, insertion loss of the path selector is relatively high, which degrades communication performance of each transmission link between a communication module and the antenna of the electronic device, resulting in poor communication performance of the electronic device.

### SUMMARY

This application provides a radio frequency circuit and an electronic device. The radio frequency circuit can adapt to a single antenna when a radio frequency integrated component having dual antenna ports is used in the electronic device, and ensure communication performance of the electronic device to the maximum extent.

To achieve the foregoing objective, the following technical solutions are used in this application.

According to a first aspect, this application provides a radio frequency circuit, where the radio frequency circuit includes a radio frequency integrated component and a controller. The radio frequency integrated component may include a first radio frequency port, a second radio frequency port, a third radio frequency port, a first antenna port, a second antenna port, a first filtering component, a second filtering component, a first single-pole multi-throw switch, and a second single-pole multi-throw switch. The first antenna port is configured to connect to an antenna, and the first antenna port is connected to a common terminal of the first single-pole multi-throw switch; a first active terminal of the first single-pole multi-throw switch is connected to the first radio frequency port by using the first filtering component, and a second active terminal of the first single-pole multi-throw switch is connected to the second radio frequency port; the second radio frequency port is further connected to the second antenna port, and the second antenna port is connected to a common terminal of the second single-pole multi-throw switch; and a first active terminal of the second single-pole multi-throw switch is connected to the third radio frequency port by using the second filtering component. The controller is configured to control the first single-pole multi-throw switch to select a transmission link in which the first radio frequency port, the first filtering component, and the first antenna port are located; or control the first single-pole multi-throw switch to select a transmission link in which the second radio frequency port and the first antenna port are located, and control the second single-pole multi-throw switch to select a transmission link in which the third radio frequency port, the second filtering component, and the second antenna port are located.

In the radio frequency circuit provided in this application, one antenna port of the radio frequency integrated component having dual antenna ports is connected to an antenna, and the other antenna port is connected to the second radio frequency port, so that the radio frequency integrated component can adapt to a single antenna, and no antenna port is left unconnected. When the controller controls the first single-pole multi-throw switch to select the transmission link in which the first radio frequency port, the first filtering component, and the first antenna port are located, insertion loss of a transmission link between the first radio frequency port and an antenna does not increase, and therefore communication performance of the transmission link between the first radio frequency port and the antenna is not degraded. When the controller controls the first single-pole multi-throw switch to select the transmission link in which the second radio frequency port and the first antenna port are located, and controls the second single-pole multi-throw switch to select the transmission link in which the third radio frequency port, the second filtering component, and the second antenna port are located, a transmission link between the third radio frequency port and an antenna is connected. In this case, insertion loss of the transmission link between the third radio frequency port and the antenna slightly increases. An increase in the insertion loss includes insertion loss generated by wiring between the second antenna port and the second radio frequency port, and insertion loss of the first single-pole multi-throw switch. Since this portion of insertion loss is relatively low, communication performance of the transmission link between the third radio frequency port and the antenna is slightly degraded. Finally, compared with adapting to a single antenna by combining a radio frequency integrated component with a path selection component, the radio frequency circuit in this application only experiences a slight degradation in communication performance of some transmission links between the radio frequency ports and the antenna. It can be learned that the radio frequency circuit provided in this application can adapt to a single antenna when a radio frequency integrated component having dual antenna ports is used, and ensure communication performance of the electronic device to the maximum extent.

In one possible implementation of the first aspect, the radio frequency integrated component may include a first register. An input terminal of the first register may be connected to the controller, and an output terminal of the first register may be connected to a control terminal of the first single-pole multi-throw switch. The controller is specifically configured to send first configuration information and third configuration information to the first register. The first configuration information is used to control the first active terminal of the first single-pole multi-throw switch to be connected to the common terminal of the first single-pole multi-throw switch, and the third configuration information is used to control the second active terminal of the first single-pole multi-throw switch to be connected to the common terminal of the first single-pole multi-throw switch.

The first register may be configured to temporarily store control instructions (that is, the first configuration information and the third configuration information) sent by the controller to the first single-pole multi-throw switch, and output the first configuration information and the third configuration information to the first single-pole multi-throw switch, so as to control the common terminal of the first single-pole multi-throw switch to be connected to a corresponding active terminal of the first single-pole multi-throw switch.

In another possible implementation of the first aspect, the radio frequency integrated component includes a second register. An input terminal of the second register is connected to the controller, and an output terminal of the second register is connected to a control terminal of the second single-pole multi-throw switch. The controller is specifically configured to send second configuration information to the second register, where the second configuration information is used to control the first active terminal of the second single-pole multi-throw switch to be connected to the common terminal of the second single-pole multi-throw switch.

The second register may be configured to temporarily store a control instruction (that is, the second configuration information) sent by the controller to the second single-pole multi-throw switch, and output the second configuration information to the second single-pole multi-throw switch, so as to control the common terminal of the second single-pole multi-throw switch to be connected to any active terminal of the second single-pole multi-throw switch.

In another possible implementation of the first aspect, the controller is specifically configured to: control the first single-pole multi-throw switch to select the transmission link in which the first radio frequency port, the first filtering component, and the first antenna port are located, when communicating in a first band; or control the first single-pole multi-throw switch to select the transmission link in which the second radio frequency port and the first antenna port are located, and control the second single-pole multi-throw switch to select the transmission link in which the third radio frequency port, the second filtering component, and the second antenna port are located, when communicating in a second band.

The first radio frequency port may correspond to the first band, and the third radio frequency port may correspond to the second band. Therefore, when a communication module communicates in the first band, the controller may control the first single-pole multi-throw switch to select the transmission link in which the first radio frequency port, the first filtering component, and the first antenna port are located, so that a transmission link corresponding to the first radio frequency port can be connected. When the communication module communicates in the second band, the controller may control the first single-pole multi-throw switch to select the transmission link in which the second radio frequency port and the first antenna port are located, and control the second single-pole multi-throw switch to select the transmission link in which the third radio frequency port, the second filtering component, and the second antenna port are located, so that a transmission link corresponding to the third radio frequency port can be connected.

In another possible implementation of the first aspect, a frequency of the first band is higher than a frequency of the second band. The first band may be a middle high band (middle high band, MHB), and the second band may be a low band (low band, LB). Generally, a quantity of middle high bands is greater than a quantity of low bands. Therefore, a quantity of transmission links with increased insertion loss is less. It can be learned that the radio frequency circuit in this application can ensure communication performance of the electronic device to the maximum extent.

In another possible implementation of the first aspect, the first filtering component or the second filtering component includes at least one of a duplexer or a filter. The filtering component may be configured to perform processing such as filtering on a signal sent from a radio frequency port or a signal received from an antenna.

According to a second aspect, this application provides a method for selecting a transmission link for a radio frequency circuit, where the method is applied to the radio frequency circuit according to the first aspect and any one of implementations of the first aspect. The method may include:
controlling the first single-pole multi-throw switch to select a transmission link in which the first radio frequency port, the first filtering component, and the first antenna port are located; or controlling the first single-pole multi-throw switch to select a transmission link in which the second radio frequency port and the first antenna port are located, and controlling the second single-pole multi-throw switch to select a transmission link in which the third radio frequency port, the second filtering component, and the second antenna port are located.

In another possible implementation of the second aspect, the controlling the first single-pole multi-throw switch to select a transmission link in which the first radio frequency port, the first filtering component, and the first antenna port are located includes: sending first configuration information to the first register, where the first configuration information is used to control the first active terminal of the first single-pole multi-throw switch to be connected to the common terminal of the first single-pole multi-throw switch.

In another possible implementation of the second aspect, the controlling the first single-pole multi-throw switch to select a transmission link in which the second radio frequency port and the first antenna port are located, and controlling the second single-pole multi-throw switch to select a transmission link in which the third radio frequency port, the second filtering component, and the second antenna port are located includes: sending third configuration information to the first register, where the third configuration information is used to control the second active terminal of the first single-pole multi-throw switch to be connected to the common terminal of the first single-pole multi-throw switch; and sending second configuration information to the second register, where the second configuration information is used to control the first active terminal of the second single-pole multi-throw switch to be connected to the common terminal of the second single-pole multi-throw switch.

In another possible implementation of the second aspect, the controlling the first single-pole multi-throw switch to select a transmission link in which the first radio frequency port, the first filtering component, and the first antenna port are located includes: controlling the first single-pole multi-throw switch to select the transmission link in which the first radio frequency port, the first filtering component, and the first antenna port are located, when communicating in a first band.

The controlling the first single-pole multi-throw switch to select a transmission link in which the second radio frequency port and the first antenna port are located, and controlling the second single-pole multi-throw switch to select a transmission link in which the third radio frequency port, the second filtering component, and the second antenna port are located includes: controlling the first single-pole multi-throw switch to select the transmission link in which the second radio frequency port and the first antenna port are located, and controlling the second single-pole multi-throw switch to select the transmission link in which the third radio frequency port, the second filtering component, and the second antenna port are located, when communicating in a second band.

In another possible implementation of the second aspect, a frequency of the first band is higher than a frequency of the second band.

In another possible implementation of the second aspect, the first filtering component or the second filtering component includes at least one of a duplexer or a filter.

According to a third aspect, this application provides an electronic device, including an antenna, and the radio frequency circuit according to the first aspect and any one of the implementations of the first aspect, where the radio frequency circuit is connected to the antenna.

In another possible implementation of the third aspect, the electronic device further includes a memory, where the memory is configured to store instructions, and when the controller in the radio frequency circuit executes the instructions, the method according to the second aspect and any one of the implementations of the second aspect is performed.

According to a fourth aspect, this application provides a computer-readable storage medium, including instructions, where when the instructions are run on an electronic device, the electronic device is enabled to perform the method according to the second aspect and any one of the implementations of the second aspect.

According to a fifth aspect, a computer program product including instructions is provided, where when the instructions are run on an electronic device, the electronic device is enabled to perform the method according to the second aspect and any one of the implementations of the second aspect.

According to a sixth aspect, a chip system is provided. The chip system includes a processor, configured to support an electronic device in implementing functions in the first aspect. In a possible design, the electronic device further includes an interface circuit. The interface circuit may be configured to receive a signal from another apparatus (for example, a memory) or send a signal to another apparatus (for example, a communication interface). The chip system may include a chip, and may further include another discrete device.

For technical effects of the second aspect to the sixth aspect, reference may be made to technical effects of the first aspect and any one of the implementations of the first aspect. Details are not described herein again.

### BRIEF DESCRIPTION OF DRAWINGS

FIG. 1 is a first schematic diagram of a structure of an electronic device in the conventional technology;
FIG. 2 is a second schematic diagram of a structure of an electronic device in the conventional technology;
FIG. 3 is a first schematic diagram of a signal flow direction of an electronic device in the conventional technology;
FIG. 4 is a second schematic diagram of a signal flow direction of an electronic device in the conventional technology;
FIG. 5 is a third schematic diagram of a structure of an electronic device in the conventional technology;
FIG. 6 is a third schematic diagram of a signal flow direction of an electronic device in the conventional technology;
FIG. 7 is a fourth schematic diagram of a signal flow direction of an electronic device in the conventional technology;
FIG. 8 is a first schematic diagram of a structure of an electronic device according to an embodiment of this application;
FIG. 9 is a first schematic diagram of a signal flow direction of an electronic device according to an embodiment of this application;
FIG. 10 is a second schematic diagram of a signal flow direction of an electronic device according to an embodiment of this application;
FIG. 11 is a second schematic diagram of a structure of an electronic device according to an embodiment of this application;
FIG. 12 is a schematic diagram of a structure of a radio frequency integrated component according to an embodiment of this application;
FIG. 13 is a first schematic diagram of a signal flow direction of a radio frequency integrated component according to an embodiment of this application;
FIG. 14 is a second schematic diagram of a signal flow direction of a radio frequency integrated component according to an embodiment of this application;
FIG. 15 is a third schematic diagram of a signal flow direction of a radio frequency integrated component according to an embodiment of this application;
FIG. 16 is a fourth schematic diagram of a signal flow direction of a radio frequency integrated component according to an embodiment of this application;
FIG. 17 is a schematic flowchart of a method for selecting a transmission link according to an embodiment of this application; and
FIG. 18 is a schematic diagram of a structure of a chip system according to an embodiment of this application.

### DESCRIPTION OF EMBODIMENTS

In embodiments of this application, terms such as "first" and "second" are merely used to distinguish features of the same type, and cannot be understood as an indication of relative importance, a quantity, or a sequence.

In the embodiments of this application, words such as "example" or "for example" are used to represent giving an example, an illustration, or a description. Any embodiment or design solution described as "example" or "for example" in this application should not be construed as being preferred or advantageous over other embodiments or design solutions. Exactly, the words such as "example" or "for example" are intended to present related concepts in a specific manner.

In the embodiments of this application, the term "couple" or "connection" should be understood in a broad sense. For example, the connection may be a physically direct connection, or an indirect connection implemented by an electronic component, such as a connection implemented by a resistor, an inductor, a capacitor, or another electronic component.

An antenna is installed in an electronic device having a cellular mobile communication (cellular mobile communication) function, and is configured to transmit or receive an electromagnetic wave signal. A quantity of antennas may be related to a size of internal space of the electronic device. For example, smaller internal space of the electronic device results in a smaller quantity of antennas.

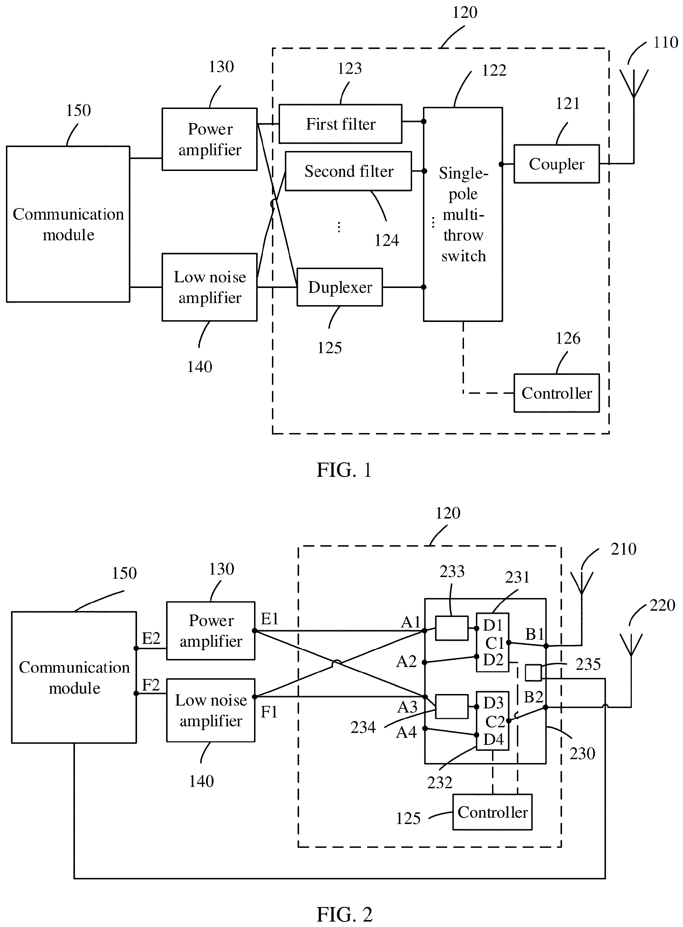

As shown in FIG. 1, the electronic device may include an antenna 110, a radio frequency circuit 120, a power amplifier 130 (for example, a multi-mode multi-band power amplifier (multi-mode multi-band power amplifier, MMBPA)), a low noise amplifier (low noise amplifier, LNA) 140, a communication module 150, and a power module (not shown in FIG. 1). The radio frequency circuit 120 may include a coupler 121, a single-pole multi-throw switch 122, a first filter 123, a second filter 124, a duplexer 125, and a controller 126. The antenna 110 is connected to a common terminal of the single-pole multi-throw switch 122 by using the coupler 121, some active terminals of the single-pole multi-throw switch 122 are connected to a first terminal of the first filter 123 and a first terminal of the second filter 124, and some other active terminals of the single-pole multi-throw switch 122 are connected to a first terminal of the duplexer 125. Both a second terminal of the first filter 123 and a second terminal of the duplexer 125 are connected to an output terminal of the power amplifier 130. A second terminal of the second filter 124 and the second terminal of the duplexer 125 are further connected to an input terminal of the low noise amplifier 140. The controller 126 is connected to a control terminal of the single-pole multi-throw switch 122.

The power module is connected to a power supply terminal of the single-pole multi-throw switch, a power supply terminal of the controller, a power supply terminal of the power amplifier, a power supply terminal of the low noise amplifier, and a power supply terminal of the communication module (a connection relationship with the power module is not shown in the figures herein).

When the communication module 150 communicates in different bands (band, B), the controller 126 is configured to control the single-pole multi-throw switch 122 to connect the common terminal of the single-pole multi-throw switch 122 to different active terminals, so that different transmission links between the communication module and the antenna 110 are connected, and therefore the communication module 150 receives and transmits signals in corresponding bands. However, because components in the radio frequency circuit 120 are independent, the radio frequency circuit 120 has a low integration level, and is difficult to debug (the components may be debugged in different manners). In addition, the radio frequency circuit 120 occupies a relatively large area, and takes up relatively large internal space of the electronic device.

It should be noted that the first filter 123 is configured to filter a signal sent by the communication module 150 and then transmit the signal to the antenna 110, and the second filter 124 is configured to filter a signal received by the antenna 110 and then transmit the signal to the communication module 150. The first filter 123 and the second filter 124 are provided in pairs, and the electronic device may include a plurality of first filters 123 and a plurality of second filters 124. In FIG. 1, one first filter 123 and one second filter 124 are used as an example.

The duplexer 125 includes two independent channels that are respectively configured to receive a signal and send a signal. Therefore, one duplexer may be configured to filter a signal sent by the communication module 150 and then transmit the signal to the antenna 110, or may be configured to filter a signal received by the antenna 110 and then transmit the signal to the communication module 150. The electronic device may alternatively include a plurality of duplexers 125. In FIG. 1, one duplexer is used as an example.

The single-pole multi-throw switch may include a plurality of active terminals. In FIG. 1, that the single-pole multi-throw switch includes three active terminals is used as an example. A sum of quantities of the first filter 123, the second filter 124, and the duplexer 125 may be less than or equal to a quantity of active terminals in the single-pole multi-throw switch 122.

To improve an integration level of the radio frequency circuit, reduce debugging difficulty, and reduce an occupied area of the radio frequency circuit, a radio frequency integrated component may be used instead of independent components such as the single-pole multi-throw switch, the filter, the duplexer, and the coupler in the radio frequency circuit. The radio frequency integrated component is a highly integrated component. For example, the radio frequency integrated component integrates components such as a filtering component (for example, a filter or a duplexer), a coupler, and a switch (for example, a single-pole multi-throw switch). Generally, the radio frequency integrated component includes at least two antenna ports, with one antenna port configured to connect to one antenna. That is, the radio frequency integrated component generally needs to adapt to at least two antennas. In this embodiment of this application, that the radio frequency integrated component includes two antenna ports is used as an example for description.

For example, as shown in FIG. 2, an electronic device may include a first antenna 210, a second antenna 220, an improved radio frequency circuit 120, a power amplifier 130, a low noise amplifier 140, a communication module 150, and a power module (not shown in FIG. 2). The improved radio frequency circuit 120 may include a radio frequency integrated component 230 and a controller 126. The radio frequency integrated component 230 includes a first radio frequency port A1, a second radio frequency port A2, a third radio frequency port A3, a fourth radio frequency port A4, a first antenna port B1, a second antenna port B2, a first single-pole multi-throw switch 231, a second single-pole multi-throw switch 232, a first filtering component 233, a second filtering component 234, and a coupler 235.

The first radio frequency port A1 may correspond to a first band, the third radio frequency port A3 corresponds to a second band, and the second radio frequency port A2 and the fourth radio frequency port A4 may be ordinary radio frequency ports. The second radio frequency port A2 may be connected to an external third filtering component, and the fourth radio frequency port A4 may be connected to an external fourth filtering component.

Specifically, the first antenna 210 is connected to the first antenna port B1, and the first antenna port B1 is further connected to a common terminal C1 of the first single-pole multi-throw switch 231. A first active terminal D1 of the first single-pole multi-throw switch 231 is connected to the first radio frequency port A1 by using the first filtering component 233. The first radio frequency port A1 is further connected to an output terminal E1 of the power amplifier 130 and an input terminal F1 of the low noise amplifier 140. An input terminal E2 of the power amplifier 130 and an output terminal F2 of the low noise amplifier 140 are connected to the communication module 150. A second active terminal D2 of the first single-pole multi-throw switch 231 is connected to the second radio frequency port A2. The second radio frequency port A2 may further be connected to the external third filtering component (not shown in FIG. 2). The second antenna 220 is connected to the second antenna port B2, and the second antenna port B2 is further connected to a common terminal C2 of the second single-pole multi-throw switch 232. A first active terminal D3 of the second single-pole multi-throw switch 232 is connected to the third radio frequency port A3 by using the second filtering component 234. The third radio frequency port A3 is further connected to the output terminal E1 of the power amplifier 130 and the input terminal F1 of the low noise amplifier 140. The input terminal E2 of the power amplifier 130 and the output terminal F2 of the low noise amplifier 140 are connected to the communication module 150. A second active terminal D4 of the second single-pole multi-throw switch 232 is connected to the fourth radio frequency port A4. The fourth radio frequency port A4 may further be connected to the external fourth filtering component (not shown in FIG. 2). The coupler 235 is connected to the communication module, and the coupler 235 is located near the first antenna port B1 and the second antenna port B2, with a small gap to the first antenna port B1 and the second antenna port B2. During signal transmission, the coupler is configured to implement power coupling of a signal transmitted by the first antenna port B1 or power coupling of a signal transmitted by the second antenna port B2, and transmit the coupled power to the communication module 150 for power detection.

The power module is connected to a power supply terminal of the first single-pole multi-throw switch, a power supply terminal of the second single-pole multi-throw switch, a power supply terminal of the controller, a power supply terminal of the power amplifier, a power supply terminal of the low noise amplifier, and a power supply terminal of the communication module (a connection relationship with the power module is not shown in the figures herein).

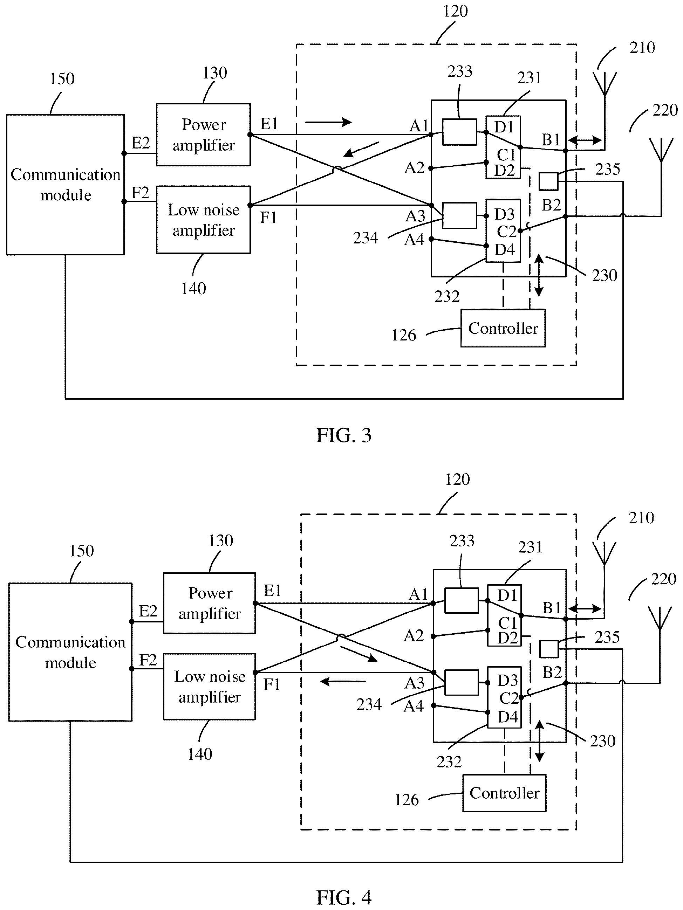

With reference to FIG. 2, as shown in FIG. 3, when the communication module 150 communicates in the first band, the controller 126 is configured to control the first single-pole multi-throw switch 231 to connect the common terminal C1 of the first single-pole multi-throw switch 231 to the first active terminal D1 of the first single-pole multi-throw switch 231, so that a transmission link between the communication module 150 and the first antenna 210 is connected, and therefore the communication module 150 communicates in the first band.

With reference to FIG. 2, as shown in FIG. 4, when the communication module 150 communicates in the second band, the second single-pole multi-throw switch 232 is controlled to connect the common terminal C2 of the second single-pole multi-throw switch 232 to the first active terminal D3 of the second single-pole multi-throw switch 232, so that a transmission link between the communication module 150 and the second antenna 220 is connected, and therefore the communication module 150 communicates in the second band.

It should be noted that the first active terminal and the second active terminal are two types of active ports, and are distinguished by whether they are connected to a filtering component inside the radio frequency integrated component. A plurality of first active terminals may be included, and a plurality of second active terminals may also be included. That is, the first single-pole multi-throw switch may include a plurality of first active terminals and a plurality of second active terminals, and the second single-pole multi-throw switch may also include a plurality of first active terminals and a plurality of second active terminals.

Similarly, the first radio frequency port, the second radio frequency port, the third radio frequency port, and the fourth radio frequency port are four types of radio frequency ports. The first radio frequency port and the third radio frequency port are radio frequency ports of the same type, and the second radio frequency port and the fourth radio frequency port are radio frequency ports of the same type. For example, the first radio frequency port and the second radio frequency port are distinguished by whether they are connected to the first active terminal of the first single-pole multi-throw switch by using a filtering component inside the radio frequency integrated component.

A quantity of first active terminals in the first single-pole multi-throw switch may correspond to a quantity of first radio frequency ports, a quantity of second active terminals in the first single-pole multi-throw switch may correspond to a quantity of second radio frequency ports, a quantity of first active terminals in the second single-pole multi-throw switch may correspond to a quantity of third radio frequency ports, and a quantity of second active terminals in the second single-pole multi-throw switch may correspond to a quantity of fourth radio frequency ports.

The first filtering component, the second filtering component, the third filtering component, and the fourth filtering component may be at least one of the following components: a filter, a duplexer, or the like. The first filtering component and the second filtering component may be components integrated into the radio frequency integrated component, and the third filtering component and the fourth filtering component are independent of the radio frequency integrated component.

Compared with the radio frequency circuit in FIG. 1, the radio frequency circuit shown in FIG. 2 uses a radio frequency integrated component. Therefore, the radio frequency circuit has a relatively high integration level, a small occupied area, and no need for debugging. However, because the radio frequency integrated component includes two antenna ports, two antennas need to be installed in the electronic device. If only one antenna is installed, either of the antenna ports of the radio frequency integrated component is left unconnected, as a result, a transmission link corresponding to the first band cannot be connected, so that the communication module cannot communicate in the first band; alternatively, a transmission link corresponding to the second band cannot be connected, so that the communication module cannot communicate in the second band. It can be learned that although an integration level of a radio frequency circuit is improved, debugging difficulty of the radio frequency circuit is reduced, and an area of the radio frequency circuit is reduced when a radio frequency integrated component having dual antenna ports is used in an electronic device, two antennas need to be installed, and therefore, the radio frequency integrated component is not applicable to an electronic device with relatively small internal space. That is, the radio frequency circuit shown in FIG. 2 cannot be applied to an electronic device with relatively small internal space.

To resolve the problems of the radio frequency circuit shown in FIG. 2-FIG. 4, the radio frequency circuit shown in FIG. 2-FIG. 4 may be improved, so that an improved radio frequency circuit satisfies requirements of high integration level, low debugging difficulty, small occupied area, and adaptation to a single antenna.

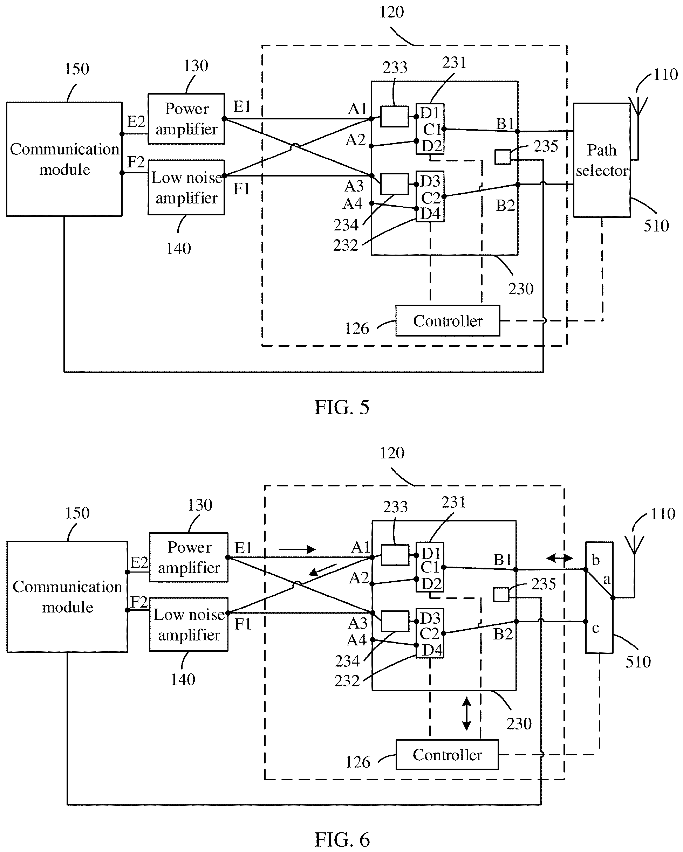

Specifically, as shown in FIG. 5, an antenna is installed in the electronic device, and a path selector 510 is added between the antenna and the radio frequency integrated component. A first terminal of the path selector 510 is connected to the antenna 110, a second terminal of the path selector 510 is connected to the first antenna port B1 of the radio frequency integrated component 230, and a third terminal of the path selector 510 is connected to the second antenna port B2 of the radio frequency integrated component 230.

For example, a path selection component may be a combiner (combiner), or may be a single-pole double-throw (single-pole double-throw, SPDT) switch, but is not limited thereto.

With reference to FIG. 5, as shown in FIG. 6, when the communication module 150 communicates in the first band, the controller 126 is configured to control the first single-pole multi-throw switch 231 to connect the common terminal C1 of the first single-pole multi-throw switch 231 to the first active terminal D1 of the first single-pole multi-throw switch 231, and control the path selector 510 to connect a first terminal a of the path selector 510 to a second terminal b of the path selector 510. In this way, the communication module 150 may be connected to the antenna 110 by using the first active terminal D1 of the first single-pole multi-throw switch 231, the common terminal C1 of the first single-pole multi-throw switch 231, the second terminal b of the path selector 510, and the first terminal a of the path selector 510, so that the communication module 150 communicates in the first band.

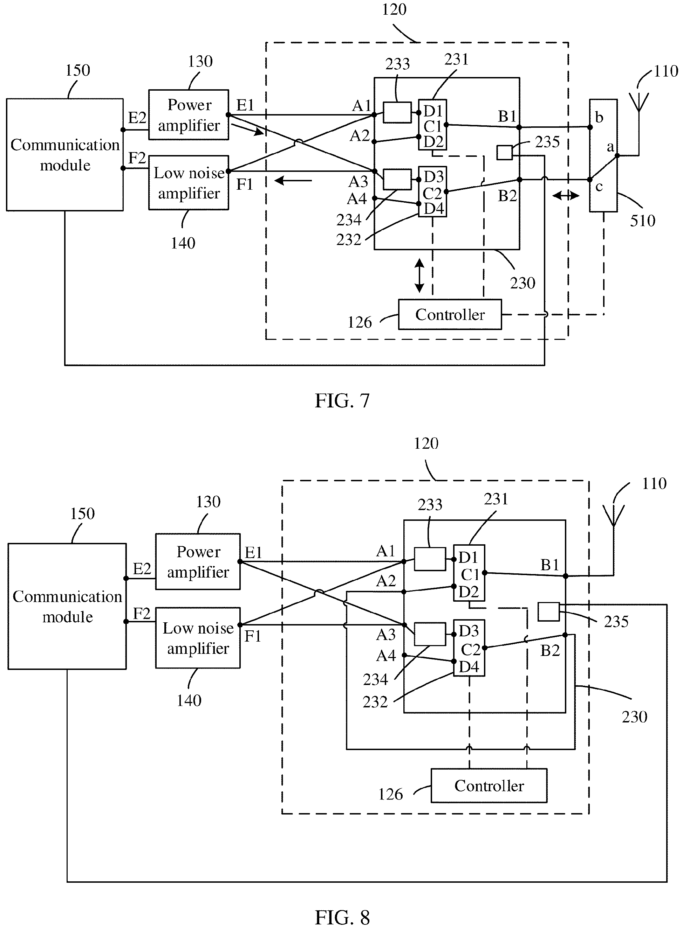

With reference to FIG. 5, as shown in FIG. 7, when the communication module 150 communicates in the second band, the controller 126 is configured to control the second single-pole multi-throw switch 232 to connect the common terminal C2 of the second single-pole multi-throw switch 232 to the first active terminal D3 of the second single-pole multi-throw switch 232, and control the path selector 510 to connect the first terminal a of the path selector 510 to a third terminal c of the path selector 510. In this way, the communication module 150 may be connected to the antenna 110 by using the first active terminal D3 of the second single-pole multi-throw switch 232, the common terminal C2 of the second single-pole multi-throw switch 232, the third terminal c of the path selector 510, and the first terminal a of the path selector 510, so that the communication module 150 communicates in the second band.

However, the path selector has relatively high insertion loss. Therefore, after the path selector is added to the radio frequency circuit, insertion loss of the radio frequency circuit is increased, so that insertion loss of a transmission link corresponding to each band is increased, which in turn degrades communication performance of each transmission link between the communication module and the antenna. For example, the insertion loss of the transmission link corresponding to the first band increases by approximately 0.7 decibel (decibel, dB), and the insertion loss of the transmission link corresponding to the second band increases by approximately 0.4 dB.

Based on the foregoing problem, an embodiment of this application provides an electronic device, where a first antenna port is connected to an antenna, and a second antenna port of a radio frequency integrated component is connected to a second radio frequency port of the radio frequency integrated component, so that the radio frequency integrated component having dual antenna ports can adapt to a single antenna. When a common terminal of a first single-pole multi-throw switch of the radio frequency integrated component is connected to a first active terminal of the first single-pole multi-throw switch, a communication module may be connected by using a transmission link between the first single-pole multi-throw switch and the antenna. Alternatively, when a common terminal of a second single-pole multi-throw switch of the radio frequency integrated component is connected to a first active terminal of the second single-pole multi-throw switch, and a common terminal of the first single-pole multi-throw switch is connected to a second active terminal of the first single-pole multi-throw switch, the communication module may be connected by using transmission links between the first single-pole multi-throw switch, the second single-pole multi-throw switch, and the antenna.

Based on this, the radio frequency integrated component may adapt to a single antenna, any antenna port is not left unconnected, and a quantity of transmission links before the communication module and the antenna is not reduced. In addition, insertion loss of the transmission link formed between the communication module and the antenna by using the first single-pole multi-throw switch remains unchanged, and an increase in insertion loss of the transmission link formed between the communication module and the antenna by using the first single-pole multi-throw switch and the second single-pole multi-throw switch is relatively small. Specifically, the increase in insertion loss includes: insertion loss generated when the second antenna port is connected to the second radio frequency port, and insertion loss generated when the common terminal of the first single-pole multi-throw switch is connected to the second active terminal of the first single-pole multi-throw switch. It can be learned that the electronic device provided in this embodiment of this application may adapt to an antenna when the radio frequency integrated component is used, and loss of communication performance between the communication module and the antenna by using the first single-pole multi-throw switch is not increased while communication performance of the transmission link formed between the communication module and the antenna by using the first single-pole multi-throw switch and the second single-pole multi-throw switch is slightly sacrificed.

The electronic device in this embodiment of this application may be mobile, or may be stationary. The electronic device may be deployed on land (for example, indoors or outdoors, handheld or vehicle-mounted); or may be deployed on a water surface (for example, a ship model); or may further be deployed in the air (for example, a drone). The electronic device may be referred to as user equipment (user equipment, UE), an access terminal, a terminal unit, a subscriber unit (subscriber unit), a terminal station, a mobile station (mobile station, MS), a mobile console, a terminal agent, or a terminal apparatus. For example, the electronic device may be a device such as a smart bracelet, a smartwatch, or a headset that has relatively small internal space and has cellular mobile communication. A specific type and a structure of the electronic device are not limited in this embodiment of this application.

As shown in FIG. 8, an electronic device provided in an embodiment of this application includes an antenna 110, a radio frequency circuit, a power amplifier 130, a low noise amplifier 140, a communication module 150, and a power module (not shown in FIG. 8). The radio frequency circuit may include a radio frequency integrated component 230 and a controller 126. The radio frequency integrated component 230 includes a first radio frequency port A1, a second radio frequency port A2, a third radio frequency port A3, a fourth radio frequency port A4, a first antenna port B1, a second antenna port B2, a first single-pole multi-throw switch 231, a second single-pole multi-throw switch 232, a first filtering component 233, and a second filtering component 234.

The antenna 110 is connected to the first antenna port B1, the first antenna port B1 is connected to a common terminal C1 of the first single-pole multi-throw switch 231, and a first active terminal D1 of the first single-pole multi-throw switch 231 is connected to the first radio frequency port A1 by using the first filtering component 233. The first radio frequency port A1 is further connected to an output terminal E1 of the power amplifier 130 and an input terminal F1 of the low noise amplifier 140. An input terminal E2 of the power amplifier 130 and an output terminal F2 of the low noise amplifier 140 are connected to the communication module 150. A second active terminal D2 of the first single-pole multi-throw switch 231 is connected to the second radio frequency port A2. The second radio frequency port A2 may be connected to a third filtering component (not shown in FIG. 8). The second radio frequency port A2 may further be connected to the second antenna port B2. The second antenna port B2 may be connected to a common terminal C2 of the second single-pole multi-throw switch 232. A first active terminal D3 of the second single-pole multi-throw switch 232 is connected to the third radio frequency port A3 by using the second filtering component 234. The third radio frequency port A3 is further connected to the output terminal E1 of the power amplifier 130 and the input terminal F1 of the low noise amplifier 140. The input terminal E2 of the power amplifier 130 and the output terminal F2 of the low noise amplifier 140 are connected to the communication module 150. A second active terminal D4 of the second single-pole multi-throw switch 232 is connected to the fourth radio frequency port A4. The fourth radio frequency port A4 may further be connected to a fourth filtering component (not shown in FIG. 6). The power module is connected to a power supply terminal of the first single-pole multi-throw switch 231, a power supply terminal of the second single-pole multi-throw switch 232, a power supply terminal of the controller 126, a power supply terminal of the power amplifier 130, a power supply terminal of the low noise amplifier 140, and a power supply terminal of the communication module 150.

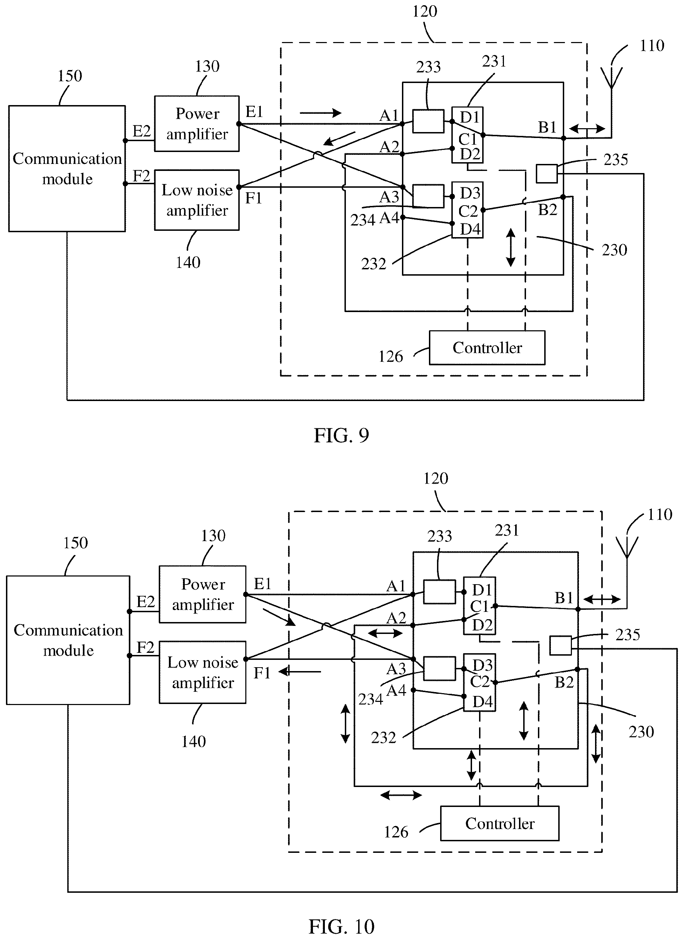

With reference to FIG. 8, as shown in FIG. 9, the controller 126 may be configured to control the first single-pole multi-throw switch 231 to connect the first active terminal D1 of the first single-pole multi-throw switch 231 to the common terminal C1 of the first single-pole multi-throw switch 231. That is, the controller 126 may be configured to control the first single-pole multi-throw switch 231 to select a transmission link in which the first radio frequency port A1, the first filtering component 233, and the first antenna port B1 are located.

Optionally, when the communication module 150 communicates in a first band, the controller 126 controls the first single-pole multi-throw switch 231 to connect the first active terminal D1 of the first single-pole multi-throw switch 231 to the common terminal C1 of the first single-pole multi-throw switch 231. That is, when the communication module 150 communicates in the first band, the controller 126 controls the first single-pole multi-throw switch to select the transmission link in which the first radio frequency port A1, the first filtering component 233, and the first antenna port B1 are located. In this way, when the communication module 150 communicates in the first band, insertion loss of a transmission link between the antenna 110 and the communication module 150 is not increased. It can be learned that when the communication module 150 communicates in the first band, communication performance of any transmission link between the antenna and the communication module 150 is not degraded.

With reference to FIG. 8, as shown in FIG. 10, the controller 126 may be configured to control the first single-pole multi-throw switch 231 to connect the second active terminal D2 of the first single-pole multi-throw switch 231 to the common terminal C1 of the first single-pole multi-throw switch 231, and control the first active terminal D3 of the second single-pole multi-throw switch 232 to the common terminal C2 of the second single-pole multi-throw switch 232. That is, the controller 126 may be configured to: control the first single-pole multi-throw switch 231 to select a transmission link in which the second radio frequency port A2 and the first antenna port B1 are located, and control the second single-pole multi-throw switch 232 to select a transmission link in which the third radio frequency port A3, the second filtering component 234, and the second antenna port B2 are located.

Optionally, when the communication module 150 communicates in a second band, the controller 126 controls the first single-pole multi-throw switch 231 to connect the second active terminal D2 of the first single-pole multi-throw switch 231 to the common terminal C1 of the first single-pole multi-throw switch 231, and controls the first active terminal D3 of the second single-pole multi-throw switch 232 to connect to the common terminal C2 of the second single-pole multi-throw switch 232. That is, when the communication module 150 communicates in the second band, the controller 126 controls the first single-pole multi-throw switch 231 to select the transmission link in which the second radio frequency port A2 and the first antenna port B1 are located, and controls the second single-pole multi-throw switch 232 to select the transmission link in which the third radio frequency port A3, the second filtering component 234, and the second antenna port B2 are located. In this way, when the communication module 150 communicates in the second band, insertion loss of a transmission link between the antenna 110 and the communication module 150 includes: insertion loss generated when the second antenna port is connected to the second radio frequency port, and insertion loss generated when the common terminal of the first single-pole multi-throw switch is connected to the second active terminal of the first single-pole multi-throw switch. For example, an increase in insertion loss is 0.6 dB. That is, when the communication module 150 communicates in the second band, communication performance of the transmission link between the antenna and the communication module 150 is slightly degraded.

Further, a frequency of the first band is higher than a frequency of the second band, and a quantity of bands in the first band is usually greater than a quantity of bands in the second band. For example, the first band is a middle high band, then the first band may include bands such as B1, B2, B3, B4, B7, B34, B38, B39, B40, B41, and B66. The second band is a low band, then the second band may include bands such as B5, B8, B12, B20, and B28.

For example, the first band includes bands B1, B3, B34, B38, B39, B40, and B41, and the second band includes B5 and B8. Table 1 shows an increase in insertion loss of each transmission link between the communication module and the antenna after a combiner and a single-pole double-throw switch are respectively added to the radio frequency circuits shown in FIG. 5-FIG. 10, and after the radio frequency integrated component provided in this embodiment of this application is used.

**Table 1**

| | Specific band | Insertion loss increased by the combiner | Insertion loss increased by the single-pole double-throw switch | Insertion loss increased by the radio frequency integrated component provided in this embodiment of this application |
|---|---|---|---|---|
| First band | B1 | 0.7 | 0.6 | 0 |
| | B3 | 0.7 | 0.6 | 0 |
| | B34/B39 | 0.7 | 0.6 | 0 |
| | B38 | 0.8 | 0.7 | 0 |
| | B40 | 0.8 | 0.7 | 0 |
| | B41 | 0.8 | 0.7 | 0 |
| Second band | B5 | 0.4 | 0.4 | 0.6 |
| | B8 | 0.4 | 0.4 | 0.6 |

It can be learned from data in Table 1 that, when the radio frequency circuit provided in this embodiment of this application communicates in the first band, a transmission link between the communication module and the antenna has no additional insertion loss, and therefore communication performance of the transmission link between the communication module and the antenna is not affected. When the radio frequency circuit communicates in the second band, because an increase in insertion loss of the transmission link between the communication module and the antenna is relatively small, communication performance of the transmission link between the communication module and the antenna is slightly degraded. In addition, because a quantity of bands in the second band is less, a quantity of transmission links that affect communication performance is less, and therefore, impact on overall communication performance of the electronic device is limited.

The electronic device in this embodiment of this application may include at least one communication module (one communication module is used as an example for description in the figures herein), and different communication modules may receive and transmit signals in different bands. The communication module may be a Bluetooth (bluetooth, BT) module, a cellular (cellular, Cell) module, a wireless fidelity (wireless fidelity, WiFi) module, a global positioning system (global positioning system, GPS) module, a BeiDou navigation satellite system (beidou navigation satellite system, BDS), a global navigation satellite system (global navigation satellite system, GLONASS), and/or a Galileo satellite navigation system (Galileo satellite navigation system, GALILEO), but is not limited thereto.

The antenna in this embodiment of this application may be a receiving antenna, may be a transmitting antenna, or may be a transceiving antenna integrating a receiving antenna and a transmitting antenna.

The single-pole multi-throw switch (for example, the first single-pole multi-throw switch or the second single-pole multi-throw switch) in this embodiment of this application may include a single-pole double-throw (single-pole double-throw, SPDT) switch and a single-pole three-throw (single-pole three-throw, SP3T) switch, but is not limited thereto. A quantity of active terminals in the single-pole multi-throw switch may be greater than a quantity of bands, so that each band for receiving and transmitting signals has a corresponding port.

The controller in this embodiment of this application may be a processor (for example, a system on chip (system on chip, SoC)), or may be a radio frequency interface chip (radio frequency interface chip, RFIC), but is not limited thereto. The controller may be configured to control the common terminal of the single-pole multi-throw switch to be connected to or disconnected from an active terminal of the single-pole multi-throw switch.

The power module in this embodiment of this application may include a power management unit (power management unit, PMU) and a battery. An input terminal of the power management unit is connected to a battery, and an output terminal of the power management unit is connected to power supply terminals of some modules of the electronic device.

The radio frequency integrated component in this embodiment of this application may include an LNA-power amplifier module integrated duplexer (LNA-power amplifier module integrated duplexer, LPAMiD), a PA module integrated with duplexer (PA module integrated with duplexer, PAMiD), a front-end module with integrated duplexer (front-end module with integrated duplexer, FEMID), and a dual-port transmitting module, but is not limited thereto.

Further, a single-pole multi-throw switch may be controlled to be connected or disconnected in a plurality of manners. For example, the controller may control, by using a register (register, Reg), a common terminal of the single-pole multi-throw switch to be connected to or disconnected from some active terminals of the single-pole multi-throw switch. The radio frequency integrated component in this embodiment of this application may further include a register. The controller may send configuration information to the register, where the configuration information is used to set a value for each binary digit (binary digit, BIT) of the register, so as to control a common terminal of a single-pole double-throw switch in the radio frequency integrated component to be connected to or disconnected from an active terminal of the single-pole multi-throw switch.

Specifically, one register may have L (L is a positive integer, for example, 8) binary digits. The controller may set values for the binary digits of the register by sending configuration information to the register, so as to control a common terminal of one single-pole multi-throw switch to be connected to an active terminal of the single-pole multi-throw switch. The value for each binary digit may be set to a first preset value (for example, 1) or a second preset value (for example, 0).

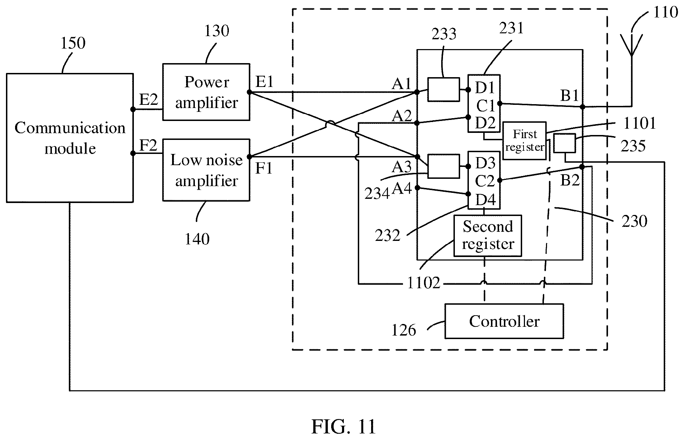

Optionally, as shown in FIG. 11, the radio frequency integrated component may further include two types of registers (which may be respectively referred to as a first register 1101 and a second register 1102), each of which may include a plurality of registers. An input terminal of the first register 1101 may be connected to the controller, and an output terminal of the first register 1101 may be connected to a control terminal of the first single-pole multi-throw switch 231. The controller 126 may send first configuration information to the first register 1101, where the first configuration information may be used to control the common terminal C1 of the first single-pole multi-throw switch 231 to be connected to the first active terminal D1 of the first single-pole multi-throw switch 231. The controller 126 may further send third configuration information to the first register 1101, where the third configuration information may be used to control the common terminal C1 of the first single-pole multi-throw switch 231 to be connected to the second active terminal D2 of the first single-pole multi-throw switch 231. An input terminal of the second register 1102 may be connected to the controller 126, and an output terminal of the second register 1102 may be connected to a control terminal of the second single-pole multi-throw switch 232. The controller 126 may send second configuration information to the second register 1102, where the second configuration information is used to control the common terminal C2 of the second single-pole multi-throw switch 232 to be connected to the first active terminal D3 of the second single-pole multi-throw switch 232.

In one embodiment, as shown in FIG. 11, when the communication module 150 communicates in the first band, the controller 126 may send first configuration information to the first register 1101, where the first configuration information may be used to control the common terminal C1 of the first single-pole multi-throw switch 231 to be connected to the first active terminal D1 of the first single-pole multi-throw switch 231. In this way, the communication module 150 may be connected to the antenna 110 by using the first radio frequency port A1, the first active terminal D1 of the first single-pole multi-throw switch 231, the common terminal C1 of the first single-pole multi-throw switch 231, and the first antenna port B1.

For example, it is assumed that the radio frequency integrated component includes two first registers (which may be respectively referred to as Reg0 and Reg1), and each first register may have 8 binary digits. The first configuration information may include a first configuration value. The first configuration value may be represented by an 8-bit binary number. After the first register receives the first configuration information, the binary digits of the first register are set based on the first configuration value, so as to control the common terminal of the first single-pole multi-throw switch to be connected to one first active terminal of the first single-pole multi-throw switch.

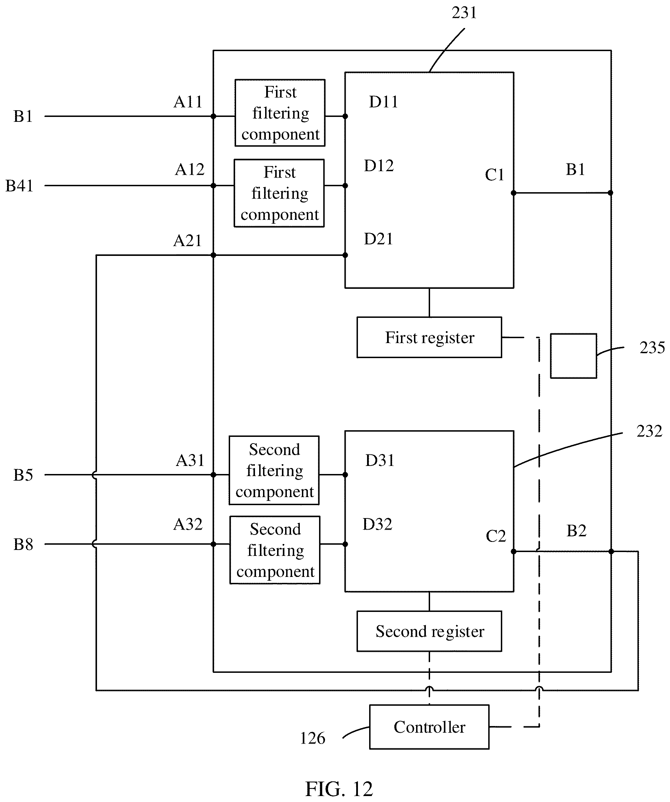

As shown in FIG. 12, it is assumed that the first single-pole multi-throw switch 231 includes two first active terminals (which may be respectively referred to as a first active terminal D11 and a first active terminal D12), and the radio frequency integrated component includes two first radio frequency ports (which may be respectively referred to as a first radio frequency port A11 and a first radio frequency port A12). The first active terminal D11 of the first single-pole multi-throw switch 231 is connected to the first radio frequency port A11 by using the first filtering component, and the first active terminal D12 of the first single-pole multi-throw switch 231 is connected to the first radio frequency port A12 by using the first filtering component. It is assumed that the band B1 in the first band corresponds to the first radio frequency port A11, and the band B41 in the first band corresponds to the first radio frequency port A12.

The following briefly describes, by using a truth table (Table 2), settings of the binary digits of the two first registers when the communication module respectively communicates in the band B1 and the band B41.

**Table 2**

| Band | Port | Reg0 | Reg1 |
|---|---|---|---|
| B1 | First active terminal D11 - common terminal of the first single-pole multi-throw switch | 10000000 | 10000000 |
| B41 | First active terminal D12 - common terminal of the first single-pole multi-throw switch | 01000000 | 01000000 |

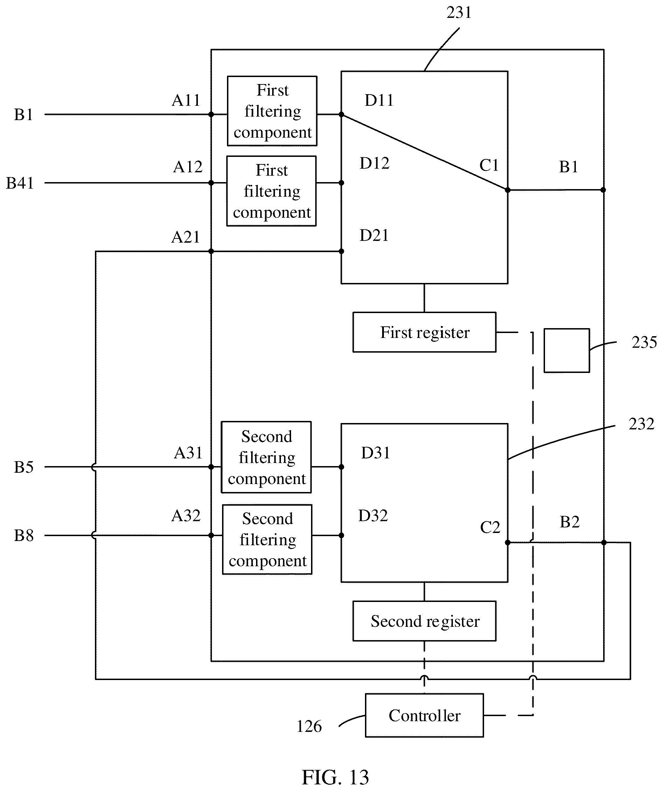

With reference to FIG. 12 and data in Table 2, as shown in FIG. 13, when the communication module communicates in the band B1, the controller may respectively send the first configuration information that includes the first configuration value (10000000, which may be represented in hexadecimal as 0x80) to the two first registers, so that the first active terminal D11 of the first single-pole multi-throw switch 231 is connected to the common terminal C1 of the first single-pole multi-throw switch 231, and therefore a transmission link corresponding to the band B1 is connected. In this way, a signal may be transmitted between the communication module and the antenna by using the transmission link corresponding to the band B1.

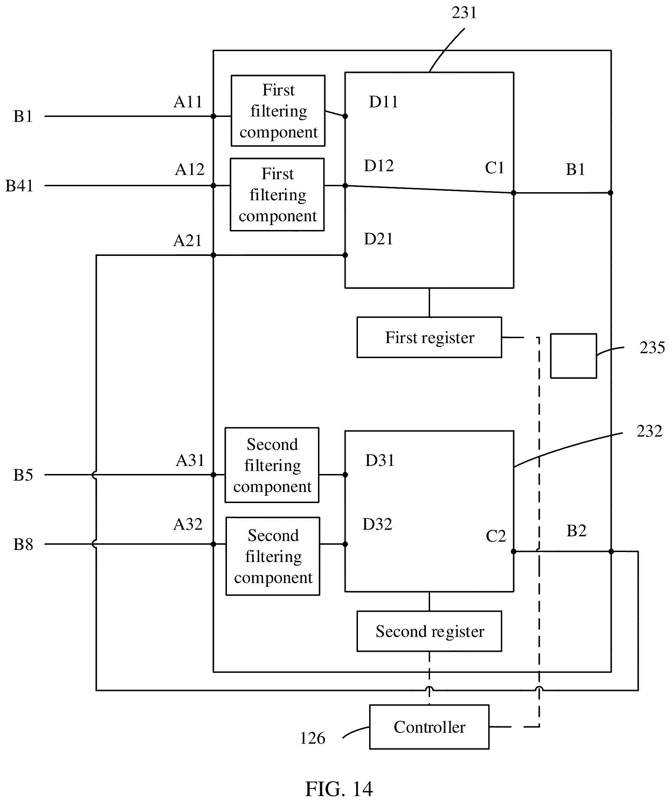

With reference to FIG. 12 and the data in Table 2, as shown in FIG. 14, when the communication module communicates in the band B41, the controller may respectively send the first configuration information that includes the first configuration value (for example, 01000000, which may be represented in hexadecimal as 0x40) to the two first registers, so that the first active terminal D12 of the first single-pole multi-throw switch 231 is connected to the common terminal C1 of the first single-pole multi-throw switch 231, and therefore a transmission link corresponding to the band B41 is connected. In this way, a signal may be transmitted between the communication module and the antenna by using the transmission link corresponding to the band B41.

In another embodiment, as shown in FIG. 11, when the communication module 150 communicates in the second band, the controller 126 may send the first configuration information to the first register 1101, where the first configuration information may be further used to control the common terminal C1 of the first single-pole multi-throw switch 231 to be connected to the second active terminal D2 of the first single-pole multi-throw switch 231; and send the second configuration information to the second register 1102, where the second configuration information is used to control the common terminal C2 of the second single-pole multi-throw switch 232 to be connected to the first active terminal D3 of the second single-pole multi-throw switch 232. In this way, the communication module 150 may be connected to the antenna 110 by using the third radio frequency port A3, the first active terminal D3 of the second single-pole multi-throw switch 232, the common terminal C2 of the second single-pole multi-throw switch 232, the second antenna port B2, the second radio frequency port A2, the second active terminal D2 of the first single-pole multi-throw switch 231, the common terminal C1 of the first single-pole multi-throw switch 231, and the first antenna port B1.

For example, it is assumed that the radio frequency integrated component further includes two second registers (which may be respectively referred to as Reg2 and Reg3), and each second register may have 8 binary digits. The second configuration information may include a second configuration value, and the first configuration information may further include a third configuration value. The second configuration value and the third configuration value may be respectively represented by an 8-bit binary number. After the first register receives the first configuration information, the binary digits of the first register are set based on the third configuration value, so as to control the common terminal of the first single-pole multi-throw switch to be connected to one second active terminal of the first single-pole multi-throw switch. After the second register receives the second configuration information, the binary digits of the second register are set based on the second configuration value, so as to control the common terminal of the second single-pole multi-throw switch to be connected to one first active terminal of the second single-pole multi-throw switch.

As shown in FIG. 12, it is assumed that the first single-pole multi-throw switch 231 may further include one second active terminal (which may be referred to as a second active terminal D21), and the second single-pole multi-throw switch 232 may include two first active terminals (which may be respectively referred to as a first active terminal D31 and a first active terminal D32). The radio frequency integrated component further includes two third radio frequency ports (which may be respectively referred to as a third radio frequency port A31 and a third radio frequency port A32) and one second radio frequency port (which may be referred to as a second radio frequency port A21). The first active terminal D31 of the second single-pole multi-throw switch 232 is connected to the third radio frequency port A31, and the first active terminal D32 of the second single-pole multi-throw switch 232 is connected to the third radio frequency port A32. The second active terminal D21 of the first single-pole multi-throw switch 231 is connected to the second radio frequency port A21. It is assumed that the band B5 in the second band corresponds to the third radio frequency port A31, and the band B8 in the second band corresponds to the third radio frequency port A32.

The following briefly describes, by using a truth table (Table 3), settings of the binary digits of the two first registers and the two second registers when the communication module respectively communicates in the band B5 and the band B8.

**Table 3**

| Band | Port | Reg0 | Reg1 | Reg2 | Reg3 |
|---|---|---|---|---|---|
| B5 | Second active terminal D21 - common terminal of the first single-pole multi-throw switch | 00100000 | 00100000 | | |
| | First active terminal D31 - common terminal of the second single-pole multi-throw switch | | | 00000001 | 00000001 |
| B8 | Second active terminal D21 - common terminal of the first single-pole multi-throw switch | 00100000 | 00100000 | | |
| | First active terminal D32 - common terminal of the second single-pole multi-throw switch | | | 00000010 | 00000010 |

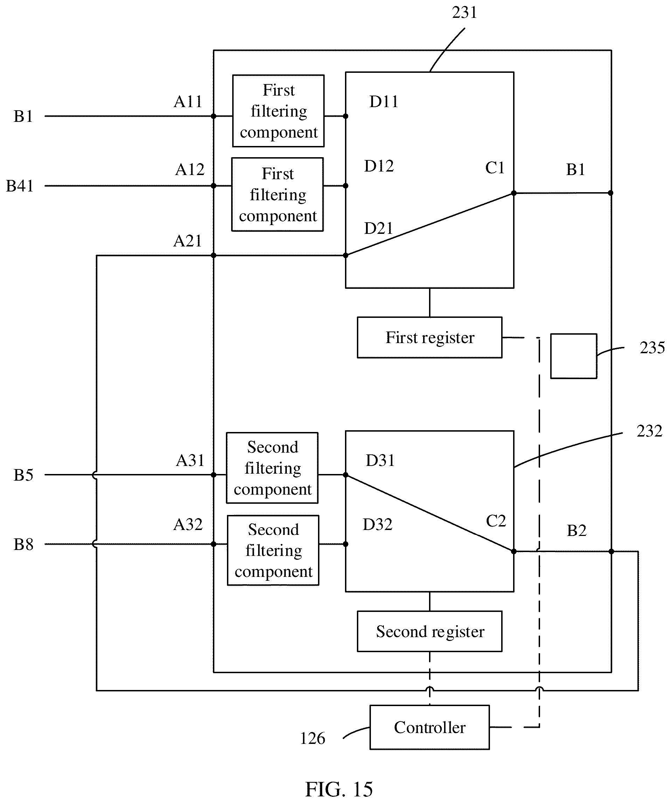

With reference to FIG. 12 and data in Table 3, as shown in FIG. 15, when the communication module communicates in the band B5, the controller may respectively send the third configuration information that includes the third configuration value (00100000, which may be represented in hexadecimal as 0x20) to the two first registers, so that the second active terminal D21 of the first single-pole multi-throw switch 231 is connected to the common terminal C1 of the first single-pole multi-throw switch 231; and respectively send the second configuration information that includes the second configuration value (00000001, which may be represented in hexadecimal as 0x01) to the two second registers, so that the first active terminal D31 of the second single-pole multi-throw switch 232 is connected to the common terminal C2 of the second single-pole multi-throw switch 232, and therefore a transmission link corresponding to the band B5 is connected. In this way, a signal may be transmitted between the communication module and the antenna by using the transmission link corresponding to the band B5.

It should be understood that the configuration values sent by the controller to the two first registers may be the same, or may be different. Similarly, the configuration values sent by the controller to the two second registers may be the same, or may be different.

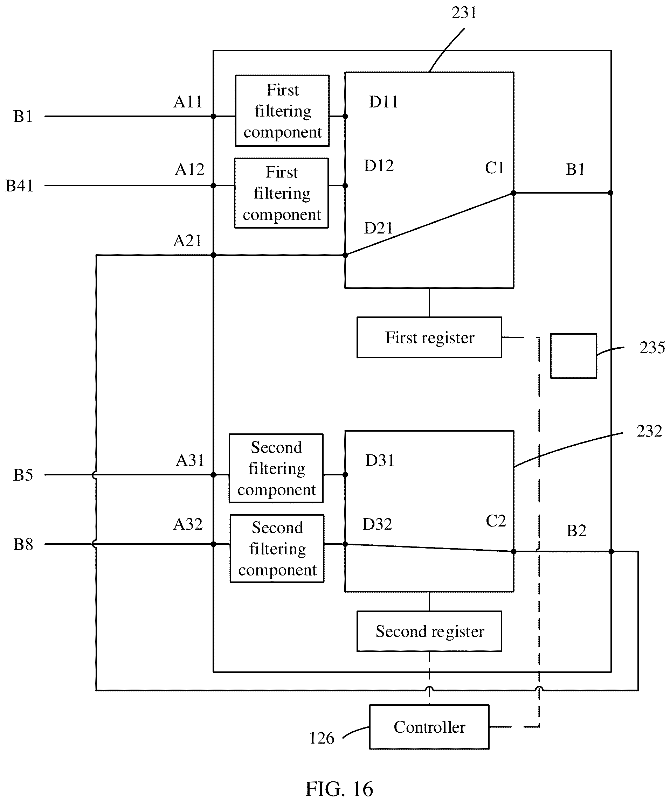

With reference to FIG. 12 and data in Table 3, as shown in FIG. 16, when the communication module communicates in the band B8, the controller may respectively send the third configuration information that includes the third configuration value (00100000, which may be represented in hexadecimal as 0x20) to the two first registers, so that the second active terminal D21 of the first single-pole multi-throw switch 231 is connected to the common terminal C1 of the first single-pole multi-throw switch 231; and respectively send the second configuration information that includes the second configuration value (00000010, which may be represented in hexadecimal as 0x02) to the two second registers, so that the first active terminal D32 of the second single-pole multi-throw switch 232 is connected to the common terminal C2 of the second single-pole multi-throw switch 232, so that a transmission link corresponding to the band B8 is connected. In this way, a signal may be transmitted between the communication module and the antenna by using the transmission link corresponding to the band B8.

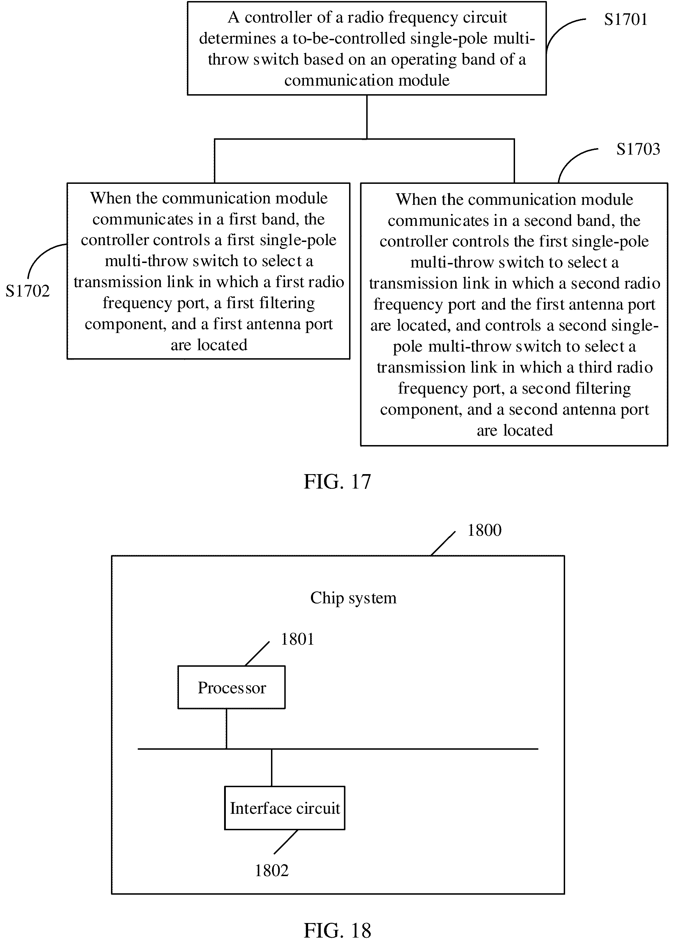

Specifically, a method for selecting a transmission link according to an embodiment of this application is described below with reference to FIG. 17. The method for selecting a transmission link is applied to the radio frequency circuit provided in this embodiment of this application. The method for selecting a transmission link may include the following steps.

S1701: The controller of the radio frequency circuit determines a to-be-controlled single-pole multi-throw switch based on an operating band of the communication module.

A circuit structure of the radio frequency circuit is shown in FIG. 8-FIG. 11, and details are not described herein again. A signal between the communication module and the antenna is transmitted by using a transmission link. One band may correspond to one transmission link. When the communication module communicates in different bands, the controller may switch different transmission links by controlling at least one single-pole multi-throw switch in the radio frequency integrated component. Therefore, after an operating band of the communication module is determined, a transmission link may be determined, so that the to-be-controlled single-pole multi-throw switch can be determined as the first single-pole multi-throw switch and/or the second single-pole multi-throw switch.

S1702: When the communication module communicates in the first band, the controller controls the first single-pole multi-throw switch to select a transmission link in which the first radio frequency port, the first filtering component, and the first antenna port are located.

As shown in FIG. 8, the first band corresponds to a first radio frequency port, the first radio frequency port is connected to a first active terminal of the first single-pole multi-throw switch, and the first antenna port is connected to the antenna and the common terminal of the first single-pole multi-throw switch. Therefore, the controller controls the first single-pole multi-throw switch to connect the first active terminal of the first single-pole multi-throw switch to the common terminal of the first single-pole multi-throw switch, so that a transmission link corresponding to the first band can be connected.

For example, with reference to the data in Table 2, as shown in FIG. 13 and FIG. 14, the first band includes a band B1 and a band B41. When the communication module communicates in the band B1, the controller respectively sends the first configuration information that includes the first configuration value (for example, 10000000) to the two first registers, so that the first active terminal D11 of the first single-pole multi-throw switch is connected to the common terminal of the first single-pole multi-throw switch, and therefore a transmission link corresponding to the band B1 is connected. When the communication module communicates in the band B41, the controller respectively sends the first configuration information that includes the first configuration value (for example, 01000000) to the two first registers, so that the first active terminal D12 of the first single-pole multi-throw switch is connected to the common terminal of the first single-pole multi-throw switch, and therefore a transmission link corresponding to the band B41 is connected.

S1703: When the communication module communicates in the second band, the controller controls the first single-pole multi-throw switch to select a transmission link in which the second radio frequency port and the first antenna port are located, and controls the second single-pole multi-throw switch to select a transmission link in which the third radio frequency port, the second filtering component, and the second antenna port are located.

As shown in FIG. 8, the second band corresponds to the third radio frequency port, and the third radio frequency port is connected to a first active terminal of the second single-pole multi-throw switch; the second antenna port is connected to the second radio frequency port and the common terminal of the second single-pole multi-throw switch; the second radio frequency port is connected to a second active terminal of the first single-pole multi-throw switch; and the first antenna port is connected to the antenna and the common terminal of the first single-pole multi-throw switch. Therefore, the controller controls the first single-pole multi-throw switch to connect the second active terminal of the first single-pole multi-throw switch to the common terminal of the first single-pole multi-throw switch, and controls the second single-pole multi-throw switch to connect the first active terminal of the second single-pole multi-throw switch to the common terminal of the second single-pole multi-throw switch, so that a transmission link corresponding to the second band can be connected.

For example, with reference to the data in Table 2, as shown in FIG. 15 and FIG. 16, the second band includes a band B5 and a band B8. When the communication module communicates in the band B5, the controller respectively sends the first configuration information that includes the third configuration value (for example, 00100000) to the two first registers, so that the second active terminal D21 of the first single-pole multi-throw switch is connected to the common terminal of the first single-pole multi-throw switch; and respectively sends the second configuration information that includes the second configuration value (for example, 00000001) to the two second registers, so that the first active terminal D31 of the second single-pole multi-throw switch is connected to the common terminal of the second single-pole multi-throw switch, and therefore a transmission link corresponding to the band B5 is connected. When the communication module communicates in the band B8, the controller respectively sends the first configuration information that includes the third configuration value (for example, 00100000) to the two first registers, so that the second active terminal D21 of the first single-pole multi-throw switch is connected to the common terminal of the first single-pole multi-throw switch; and respectively sends the second configuration information that includes the second configuration value (for example, 00000010) to the two second registers, so that the first active terminal D31 of the second single-pole multi-throw switch is connected to the common terminal of the second single-pole multi-throw switch, and therefore a transmission link corresponding to the band B5 is connected.

In conclusion, in the radio frequency circuit provided in this embodiment of this application, the radio frequency integrated component having dual antenna ports is used to adapt to a single antenna, which may be applied to an electronic device (for example, a smartwatch) with limited internal space. Then, the first single-pole multi-throw switch and/or the second single-pole multi-throw switch in the radio frequency integrated component are controlled by the controller to switch transmission links, so that the communication module can communicate in different bands. In addition, with communication performance of transmission links in the second band slightly sacrificed, loss of communication performance of transmission links in the first band is not increased. Finally, because a quantity of bands in the first band is greater than a quantity of bands in the second band, a quantity of transmission links that affect communication performance is less, and therefore, the radio frequency circuit provided in this embodiment of this application can greatly ensure communication performance of the electronic device.

As shown in FIG. 18, an embodiment of this application further provides a chip system. The chip system 1800 includes at least one processor 1801 and at least one interface circuit 1802. The at least one processor 1801 and the at least one interface circuit 1802 may be interconnected through a line. The processor 1801 is configured to support an electronic device in implementing the steps in the foregoing method embodiments. The at least one interface circuit 1802 may be configured to receive a signal from another apparatus (for example, a memory), or send a signal to another apparatus (for example, a communication interface). The chip system may include a chip, and may further include another discrete device.

An embodiment of this application further provides a computer-readable storage medium. The computer-readable storage medium includes instructions. When the instructions are run on an electronic device, the electronic device is enabled to perform the steps in the foregoing method embodiments.

An embodiment of this application further provides a computer program product including instructions. When the instructions are run on an electronic device, the electronic device is enabled to perform the steps in the foregoing method embodiments.

For technical effects of the chip system, the computer-readable storage medium, and the computer program product, refer to the technical effects of the foregoing method embodiments.

It should be understood that in various embodiments of this application, sequence numbers of the foregoing processes do not mean a sequence of execution. The execution sequence of the processes should be determined based on functions and internal logic of the processes, and should not constitute any limitation on an implementation process of the embodiments of this application.

A person of ordinary skill in the art may be aware that the example modules and algorithm steps described with reference to the embodiments disclosed in this specification can be implemented by using electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that such an implementation goes beyond the scope of this application.

A person skilled in the art may clearly understand that for ease and brevity of description, for a specific operation process of the system, apparatus, and module described above, refer to a corresponding process in the foregoing method embodiments. Details are not described herein again.

In the several embodiments provided in this application, it should be understood that the disclosed system, device, and method may be implemented in another manner. For example, the described device embodiment is merely an example. For example, division of the modules is merely logical function division and there may be other division manners during actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in an electrical form, a mechanical from, or another form.

The modules described as separate components may or may not be physically separate, and components displayed as modules may or may not be physical modules, may be located in one device, or may be distributed on a plurality of devices. Some or all of the modules may be selected based on an actual requirement, to achieve the objectives of the solutions in the embodiments.

In addition, functional modules in the embodiments of this application may be integrated into one device, or each of the modules may exist alone physically, or two or more modules may be integrated into one device.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. A radio frequency circuit, comprising a radio frequency integrated component and a controller, wherein the radio frequency integrated component comprises a first antenna port, a second antenna port, a first single-pole multi-throw switch, a second single-pole multi-throw switch, a first filtering component, a second filtering component, a first radio frequency port, a second radio frequency port, and a third radio frequency port; the first antenna port is configured to connect to an antenna, and the first antenna port is connected to a common terminal of the first single-pole multi-throw switch; a first active terminal of the first single-pole multi-throw switch is connected to the first radio frequency port by using the first filtering component, and a second active terminal of the first single-pole multi-throw switch is connected to the second radio frequency port; the second radio frequency port is connected to the second antenna port, and the second antenna port is connected to a common terminal of the second single-pole multi-throw switch; a first active terminal of the second single-pole multi-throw switch is connected to the third radio frequency port by using the second filtering component; and the controller is configured to:
control the first single-pole multi-throw switch to select a transmission link in which the first radio frequency port, the first filtering component, and the first antenna port are located;
or
control the first single-pole multi-throw switch to select a transmission link in which the second radio frequency port and the first antenna port are located, and control the second single-pole multi-throw switch to select a transmission link in which the third radio frequency port, the second filtering component, and the second antenna port are located.

2. The radio frequency circuit according to claim 1, wherein the radio frequency integrated component comprises a first register, an input terminal of the first register is connected to the controller, and an output terminal of the first register is connected to a control terminal of the first single-pole multi-throw switch; and the controller is specifically configured to:
send first configuration information and third configuration information to the first register, wherein the first configuration information is used to control the first active terminal of the first single-pole multi-throw switch to be connected to the common terminal of the first single-pole multi-throw switch, and the third configuration information is used to control the second active terminal of the first single-pole multi-throw switch to be connected to the common terminal of the first single-pole multi-throw switch.

3. The radio frequency circuit according to claim 1 or 2, wherein the radio frequency integrated component comprises a second register, an input terminal of the second register is connected to the controller, and an output terminal of the second register is connected to a control terminal of the second single-pole multi-throw switch; and the controller is specifically configured to:
send second configuration information to the second register, wherein the second configuration information is used to control the first active terminal of the second single-pole multi-throw switch to be connected to the common terminal of the second single-pole multi-throw switch.

4. The radio frequency circuit according to any one of claims 1-3, wherein the controller is specifically configured to:
control the first single-pole multi-throw switch to select the transmission link in which the first radio frequency port, the first filtering component, and the first antenna port are located, when communicating in a first band; or
control the first single-pole multi-throw switch to select the transmission link in which the second radio frequency port and the first antenna port are located, and control the second single-pole multi-throw switch to select the transmission link in which the third radio frequency port, the second filtering component, and the second antenna port are located, when communicating in a second band.

5. The radio frequency circuit according to claim 4, wherein a frequency of the first band is higher than a frequency of the second band.

6. The radio frequency circuit according to any one of claims 1-5, wherein the first filtering component or the second filtering component comprises at least one of a duplexer or a filter.

7. A method for selecting a transmission link, applied to the radio frequency circuit according to any one of claims 1-6, wherein the method comprises:
controlling the first single-pole multi-throw switch to select a transmission link in which the first radio frequency port, the first filtering component, and the first antenna port are located;
or
controlling the first single-pole multi-throw switch to select a transmission link in which the second radio frequency port and the first antenna port are located, and controlling the second single-pole multi-throw switch to select a transmission link in which the third radio frequency port, the second filtering component, and the second antenna port are located.

8. The method according to claim 7, wherein the controlling the first single-pole multi-throw switch to select a transmission link in which the first radio frequency port, the first filtering component, and the first antenna port are located comprises:
sending first configuration information to the first register, wherein the first configuration information is used to control the first active terminal of the first single-pole multi-throw switch to be connected to the common terminal of the first single-pole multi-throw switch.

9. The method according to claim 7 or 8, wherein the controlling the first single-pole multi-throw switch to select a transmission link in which the second radio frequency port and the first antenna port are located, and controlling the second single-pole multi-throw switch to select a transmission link in which the third radio frequency port, the second filtering component, and the second antenna port are located comprises:
sending third configuration information to the first register, wherein the third configuration information is used to control the second active terminal of the first single-pole multi-throw switch to be connected to the common terminal of the first single-pole multi-throw switch; and sending second configuration information to the second register, wherein the second configuration information is used to control the first active terminal of the second single-pole multi-throw switch to be connected to the common terminal of the second single-pole multi-throw switch.

10. The method according to any one of claims 7-9, wherein the controlling the first single-pole multi-throw switch to select a transmission link in which the first radio frequency port, the first filtering component, and the first antenna port are located comprises:
controlling the first single-pole multi-throw switch to select the transmission link in which the first radio frequency port, the first filtering component, and the first antenna port are located, when communicating in a first band; or
the controlling the first single-pole multi-throw switch to select a transmission link in which the second radio frequency port and the first antenna port are located, and controlling the second single-pole multi-throw switch to select a transmission link in which the third radio frequency port, the second filtering component, and the second antenna port are located comprises:
controlling the first single-pole multi-throw switch to select the transmission link in which the second radio frequency port and the first antenna port are located, and controlling the second single-pole multi-throw switch to select the transmission link in which the third radio frequency port, the second filtering component, and the second antenna port are located, when communicating in a second band.

11. The method according to claim 10, wherein a frequency of the first band is higher than a frequency of the second band.

12. The method according to any one of claims 7-11, wherein the first filtering component or the second filtering component comprises at least one of a duplexer or a filter.

13. An electronic device, comprising an antenna and the radio frequency circuit according to any one of claims 1-6, wherein the radio frequency circuit is connected to the antenna.

14. The electronic device according to claim 13, further comprising a memory, wherein the memory is configured to store instructions, and when the controller in the radio frequency circuit executes the instructions, the method according to any one of claims 7-12 is performed.

15. A computer-readable storage medium, comprising instructions, wherein when the instructions are executed on an electronic device, the electronic device is enabled to perform the method according to any one of claims 7-12.
